# EUROPEAN PATENT APPLICATION

(11) **EP 4 475 295 A1**
(43) Date of publication of application: **11.12.2024**
(21) Application number: 22941925.4
(22) Date of filing: 16.05.2022
(51) Int. Cl.: H01M 50/15, H01M 50/176, H01M 50/586, H01M 50/593

(54) **END COVER ASSEMBLY, CELL, BATTERY AND ELECTRICAL DEVICE**

(71) Applicant: Contemporary Amperex Technology (Hong Kong) Limited, Central, Central And Western District (HK)
(72) Inventor: LI, Quankun, Ningde, Fujian 352100 (CN); ZHOU, Wenlin, Ningde, Fujian 352100 (CN); WANG, Peng, Ningde, Fujian 352100 (CN); JIN, Haizu, Ningde, Fujian 352100 (CN)
(74) Representative: Ran, Handong
(86) International application number: PCT/CN2022/093113
(87) International publication number: WO 2023/220874

(57) **Abstract**

The present application provides an end cover assembly, a cell, a battery and an electrical device. The end cover assembly comprises: an end cover provided with through holes; electrode terminals each at least partially located in a through hole; terminal plates insulatedly provided on the side of the end cover in the axial direction of the through holes, the terminal plates being connected to the electrode terminals; and first insulating members provided around the electrode terminals in the circumferential direction of the through holes, each at least partially clamped between an electrode terminal and a terminal plate in the axial direction, and each at least partially located between an electrode terminal and the end cover and abutting against at least one of the electrode terminal and the end cover in the radial direction of the through holes. The end cover assembly provided by the present application is low in short-circuit risk and good in safety performance.

## Description

### TECHNICAL FIELD

The present disclosure relates to the field of a battery, and in particular to an end cover assembly, a battery cell, a battery and an electrical apparatus.

### BACKGROUND

Energy conservation and emission reduction are the key to a sustainable development of the automobile industry. Electric vehicles have become an important part of the sustainable development of the automobile industry as they are energy saving and environmentally friendly. Battery technology is an important factor related to the development of the electric vehicles.

In the existing battery technology, an end cover assembly has a risk of short circuit, which affects the safety performance of the battery cell. Therefore, how to reduce the short circuit risk of the end cover assembly is one of research focuses in the industry.

### SUMMARY

In light of the above problem, the present disclosure provides an end cover assembly, a battery cell, a battery and an electrical apparatus with low risk of short circuit and good safety performance.

In a first aspect, the present disclosure provides an end cover assembly including: an end cover provided with a through hole; an electrode terminal, at least part of which is located in the through hole; a terminal board, insulated and provided on a side of the end cover in an axial direction of the through hole, and connected to the electrode terminal; and a first insulating member arranged around the electrode terminal along a peripheral direction of the through hole, wherein at least part of the first insulating member is clamped between the electrode terminal and the terminal board in the axial direction, and at least part the first insulating member is located between the electrode terminal and the end cover in a radial direction of the through hole and abuts against at least one of the electrode terminal and the end cover.

In the technical solution of embodiments of the present disclosure, the end cover assembly includes the end cover, the electrode terminal, the terminal board and the first insulating member. The electrode terminal is arranged in the through hole of the end cover, and the terminal board is connected to the electrode terminal. The first insulating member is disposed around the electrode terminal, at least part of the first insulating member is clamped between the electrode terminal and the terminal board in the axial direction of the through hole, and at least part of the first insulating member is located between the electrode terminal and the end cover in the radial direction of the through hole and abuts against at least one of the electrode terminal and the end cover, thus when a metal wire is generated between the terminal board and the electrode terminal, a transmission path from the metal wire to the end cover can be prevented in multiple directions by means the part of the first insulating member clamped between the electrode terminal and the terminal board in the axial direction and the part of the first insulating member between the electrode terminal and the end cover in the radial direction, thereby preventing the metal wire from contacting the electrode terminal and the end cover and reducing the risk of short circuit.

In some embodiments, the first insulating member includes a first insulating part and a second insulating part, an end of the first insulating part away from the electrode terminal in the radial direction is connected to an end of the second insulating part facing the terminal board in the axial direction, at least part of the first insulating part is clamped between the electrode terminal and the terminal board, and at least part of the second insulating part is located between the electrode terminal and the end cover and abuts against at least one of the electrode terminal and the end cover.

In the end cover assembly provided in embodiments of the present disclosure, the first insulating member includes the first insulating part and the second insulating part, and at least part of the first insulating part is clamped between the electrode terminal and the terminal board, thus the first insulating part can prevent the metal wire from extending toward the end cover in the radial direction; at least part of the second insulating part is located between the electrode terminal and the end cover and abuts against at least one of the electrode terminal and the end cover, the metal wire on the electrode terminal and the metal wires on the end cover can be prevented from extend toward each other and coming into contact, effectively reducing the risk of short circuit between the electrode terminal and the end cover caused by the metal wires coming into contact. Moreover, the end of the first insulating part away from the electrode terminal in the radial direction is connected to the end of the second insulating part facing the terminal board in the axial direction, thereby facilitating a forming of the first insulating part and the installation and positioning of the first insulating part and the second insulating part.

In some embodiments, the first insulating part and the second insulating part are formed as an integral film layer.

In the end cover assembly provided in embodiments of the present disclosure, the first insulating part and the second insulating part are formed as an integral film layer, thereby guaranteeing a protective effect of the first insulating member and avoiding the risk of short circuit between the electrode terminal and the end cover caused by the metal wires coming into contact, at the same time facilitating the forming of the film layer structure, reducing the difficulty of forming, and guaranteeing the connection strength between the first insulating part and the second insulating part. Moreover, the form of a film layer takes up a little space and is malleable to have a certain amount of deformation, which is convenient for assembly.

In some embodiments, a first gap is formed between an end of the first insulating part close to the electrode terminal and the electrode terminal in the radial direction.

In the end cover assembly provided in embodiments of the present disclosure, the first gap is formed between an end of the first insulating part close to the electrode terminal and the electrode terminal in the radial direction, thereby facilitating the assembly of the first insulating part on the electrode terminal; the first gap can be configured to accommodate the metal wire generated during the assembly of the terminal board and the electrode terminal, thereby preventing the metal wire from piercing the first insulating part, and preventing the metal wire extending and migrating to the side where the end cover is located caused by deformation under an external force such as creeping of the first insulating part when the end cover assembly is in operation.

In some embodiments, a cutout communicating with the first gap is provided on an end of the terminal board facing the first insulating member in the axial direction.

In the end cover assembly provided in embodiments of the present disclosure, the cutout communicating with the first gap is provided on an end of the terminal board facing the first insulating member in the axial direction, thereby facilitating the assembly between the terminal board and the electrode terminal in the axial direction; at the same time, the cutout can reduce a frictional contact toward one end of the first insulating member when the terminal board and the electrode terminal are assembled, thereby reducing the probability of metal wires being generated when the terminal board and the electrode terminal are assembled.

In some embodiments, an orthographic projection of the cutout in the axial direction is located within the first gap.

In the end cover assembly provided in embodiments of the present disclosure, the orthographic projection of the cutout in the axial direction of the through hole is located within the first gap, thus the metal wires generated during assembly of the terminal board and the electrode terminal can all fall into the first gap, the first insulating part can restrict the extension of the metal wire to the side where the end cover is located in the radial direction, thereby reducing the probability of short circuit.

In some embodiments, the cutout is configured as a tapered hole, and an opening of an end of the cutout facing the first insulating part is larger than an opening of an end of the cutout away from the first insulating part in the axial direction.

In the end cover assembly provided in embodiments of the present disclosure, the cutout is configured as a tapered hole, and an opening of an end of the cutout facing the first insulating part is larger than an opening of an end of the cutout away from the first insulating part in the axial direction, thereby facilitating the assembly between the terminal board and the electrode terminal, and reducing the metal wires caused by friction.

In some embodiments, the electrode terminal includes a main body and a protruding part protruding from the main body in the axial direction, the terminal board is sleeved on the protruding part, a radial dimension of the main body is greater than a radial dimension of the protruding part in the radial direction, a step surface is connected between the main body and the protruding part, the first insulating part is arranged around the protruding part and is stacked on the step surface, and the second insulating part is arranged around an outer peripheral surface of the main body and abuts against the outer peripheral surface.

In the end cover assembly provided in embodiments of the present disclosure, the electrode terminal is configured in the form of the above structural, allowing the first insulating part to be clamped between the main body and the terminal board, and the second insulating part to surround and fit on the outer peripheral surface of the main body, and effectively preventing the metal wire from extending and contacting between the electrode terminal and the end cover.

In some embodiments, the electrode terminal further includes a limiting part that is provided around the main body and is located on a side of the main body away from the protruding part in the axial direction, and a second gap is formed between the second insulating part and a surface of the limiting part facing the protruding part in the axial direction.

In the end cover assembly provided in embodiments of the present disclosure, the limiting part of the electrode terminal can facilitate connection with components such as the end cover. By the second gap formed between the second insulating part and the surface of the limiting part facing the protruding part, a margin for machining accuracy is left, and the second insulating part is prevented from being too long, which will cause an interference when the entire first insulating member to be in the state of being mounted to the electrode terminal or unevenness of the first insulating part after assembly and thereby adversely affecting barrier requirements of the metal wire.

In some embodiments, the end cover assembly further includes a sealing member that is arranged around the first insulating member and extends into the through hole, and at least part of the sealing member is clamped between the first insulating member and the end cover in the radial direction.

In the end cover assembly provided in embodiments of the present disclosure, the sealing member is arranged around the first insulating member and extends into the through hole, thereby sealing an edge of the through hole and improving the safety performance of the end cover assembly; at the same time, at least part of the sealing member is clamped between the first insulating member and the end cover in the radial direction, thereby improving the sealing performance of the end cover assembly, and the sealing member cooperates with the first insulating member to block the metal wire, thereby reducing the probability of a short circuit between the electrode terminal and the end cover caused by the metal wires coming into contact.

In some embodiments, at least part of the sealing member is clamped between the electrode terminal and the end cover in the axial direction.

In the end cover assembly provided in embodiments of the present disclosure, at least part of the sealing member is clamped between the electrode terminal and the end cover in the axial direction, thereby guaranteeing the sealing performance between the end cover and the electrode terminal, avoiding electrolyte leakage, and at the same time preventing external pollutants from entering the battery.

In some embodiments, the end cover assembly further includes a second insulating member that is arranged around the electrode terminal, and at least part of the second insulating member is clamped between the end cover and the terminal board in the axial direction, thereby insulating the terminal board from the end cover.

In the end cover assembly provided in embodiments of the present disclosure, the second insulating member can insulate the terminal board from the end cover, thereby improving the safety performance of the end cover assembly.

In some embodiments, the second insulating member includes a main separator that is clamped between the end cover and the terminal board in the axial direction and a first protrusion that is provided at an end of the main separator close to the electrode terminal in the radial direction, and the first protrusion extends into the through hole and abuts against the sealing member.

In the end cover assembly provided in embodiments of the present disclosure, the second insulating member with the main separator and the first protrusion can insulate the terminal board from the end cover. At the same time, the first protrusion abutted against the sealing member that co-covers the end cover with the sealing member to form the wall of the through hole, can play a joint protective role with the first insulating member, thereby providing double barriers on the migration path of the metal wire, and avoiding the short circuit caused by the electrode terminal contacting the end cover.

In some embodiments, the second insulating member further comprises a second protrusion that is disposed on an end of the main separator away from the electrode terminal in the radial direction and extends towards a side away from the end cover along the axial direction, and the second protrusion is arranged around the terminal board along the peripheral direction and abuts against the terminal board.

In the end cover assembly provided in embodiments of the present disclosure, the second protrusion that surrounds the terminal board in the peripheral direction and abuts against the terminal board can limit the terminal board in the radial direction, and the outer peripheral surface of the terminal board can be protected through the second protrusion to avoid short circuit with the end cover, thereby insulating the terminal board from the end cover, and improving the safety performance of the end cover assembly.

In a second aspect, embodiments of the present disclosure provides a battery cell including a housing provided with an opening; the above end cover assembly configured to close the opening and form an accommodating cavity with the housing; an electrode assembly provided in the accommodating cavity and electrically connected to the electrode terminal of the end cover assembly.

In a third aspect, embodiments of the present disclosure provides a battery including the above battery cell.

In a fourth aspect, embodiments of the present disclosure provides an electrical apparatus including the above battery that is configured to provide electrical energy.

The above description is only an overview of the technical solutions of the present disclosure. In order to have a clearer understanding of the technical means of the present disclosure and implement them according to the content of the description, and in order to make the above and other purposes, features and advantages of the present disclosure more obvious and understandable, specific implementations of the present disclosure are specifically listed below.

### BRIEF DESCRIPTION OF THE DRAWINGS

Various other advantages and benefits will become apparent to those skilled in the art upon reading following detailed description of preferred embodiments. Drawings are for the purpose of illustrating preferred embodiments only and are not to be construed as limiting the present disclosure. Throughout the drawings, the same reference sign is used to designate the same component.
FIG. 1 is a schematic structural diagram of a vehicle provided in an embodiment of the present disclosure;
FIG. 2 is a schematic structural diagram of a battery pack provided in an embodiment of the present disclosure;
FIG. 3 is an exploded schematic structural diagram of a battery cell provided in an embodiment of the present disclosure;
FIG. 4 is an isometric view of an end cover assembly provided in some embodiments of the present disclosure;
FIG. 5 is an exploded view of an end cover assembly provided in some embodiments of the present disclosure;
FIG. 6 is a top view of an end cover assembly provided in some embodiments of the present disclosure;
FIG. 7 is a cross-sectional view taken along line A-A in FIG. 6;
FIG. 8 is a partial enlarged view of part B in FIG. 7;
FIG. 9 is a schematic structural diagram of a first insulating member provided in some embodiments of the present disclosure;
FIG. 10 is an isometric view of an electrode terminal provided in some embodiments of the present disclosure;
FIG. 11 is a schematic structural diagram of a second insulating member provided in some embodiments of the present disclosure.

Reference numbers in the specific implementation are as follows:
1000-vehicle;
100-battery; 200-controller; 300-motor;
10-box; 11-first part; 12-second part;
20-battery cell; 21-housing; 22-electrode assembly; 23-end cover assembly;
231-end cover; 2311-through hole;
232-electrode terminal; 2321-main body; 2322-protruding part; 2322a-first shaft section; 2322b-second shaft section; 2323-limiting part;
233-terminal board; 2331-cutout;
234- first insulating member; 2341- first insulating part; 2342- second insulating part;
235-sealing member;
236-second insulating member; 2361-main separator; 2362-first protrusion; 2363-second protrusion;
237-first gap; 238-second gap;
X-axial direction; Y-radial direction.

### DETAILED DESCRIPTION

Embodiments of technical solutions of the present disclosure will be described in detail below with reference to accompanying drawings. Following embodiments are only used to illustrate the technical solutions of the present disclosure more clearly, and are therefore only used as examples and cannot be used to limit the protection scope of the present disclosure.

It should be noted that unless otherwise defined, technical and scientific terms used in embodiments of the present disclosure have the same meaning as those normally understood by those skilled in the art.

In the description of embodiments of the present disclosure, orientations or positional relationship indicated by technical terms "center", "longitudinal", "lateral", "length", "width", "thickness", "upper", "lower", "front", "rear", "left", "right", "vertical" "horizontal", "top", "bottom", "inner", "outer", "clockwise", "counterclockwise", "axial", "radial", "peripheral", etc. are based on orientations or positional relationship indicated in the drawings, is only for the convenience of describing the embodiments of the present disclosure and simplifying the description, and does not indicate or imply that the device or element referred to must have a specific orientation, be constructed and operated in a specific orientation, and therefore cannot be understood as limitations to the embodiments of the present disclosure.

Further, technical terms "first", "second", etc. are used for description and cannot be understood as indicating or implying the relative importance or implicitly indicating the number of technical features. In the description of the embodiments of the present disclosure, the term "a plurality of" as used in embodiments of the present disclosure means more than two.

In the description of embodiments of the present disclosure, unless otherwise stated or defined, terms "installation", "connected to", "connected with", "attachment" and the like are to be understood broadly, and may be, for example, a fixed connection, a detachable connection, or an integral connection; a mechanical connection or an electrical connection; they can be connected directly or indirectly through an intermediate medium or an internal communication or interaction between two elements. The specific meaning of the above terms in the present disclosure can be understood by those skilled in the art according to actual circumstance.

In the description of the embodiments of the present disclosure, unless otherwise expressly stated or defined, a first feature "above" or "below" a second feature may mean that the first feature and the second feature are in direct contact, or the first feature and the second feature are in indirect contact through intermediate medium. Furthermore, the first feature "above", "on" or "over" the second feature may mean that the first feature is directly above or diagonally above the second feature, or simply means that the first feature is higher in level than the second feature. The first feature "below", "under" or "beneath" the second feature may mean that the first feature is directly below or diagonally below the second feature, or simply means that the first feature is lower in level than the second feature.

At present, judging from the development of the market situation, application of power batteries is becoming more and more extensive. Power batteries are not only used in energy storage power systems such as hydropower, thermal power, wind power and solar power stations, but are also widely used in electric vehicles such as electric bicycles, electric motorcycles and electric cars, as well as in many fields such as military equipment and aerospace. As the application fields of power batteries continue to expand, their market demand is also constantly expanding.

A battery is usually composed of multiple battery cells connected together, and an end cover assembly of the battery cell is configured to extract the electric energy from the battery cell. The end cover assembly usually includes an electrode terminal, a terminal board and an end cover. The electrode terminal is electrically connected to the terminal board to extract the electric energy, and the end cover is insulated from the electrode terminal and the terminal board to prevent electric energy from leaking from the end cover.

The inventors have noticed that short circuit often occurs in the battery cells during use, which affects the safety performance of the battery cells and a battery where the battery cells are applied. After further research, the inventors found that during a connection process of the electrode terminal and the terminal board of the end cover assembly, some metal wires would be generated due to relative friction, extend along a gap and contact the end cover, thus a short circuit occurs between the electrode terminal and the end cover, thereby causing a safety accident of the battery cells.

In order to alleviate the problem of short circuit of the battery cells, the inventors found that the end cover assembly can be improved by blocking a propagation path of the metal wire, thereby reducing the probability of short circuit between the electrode terminal and the end cover caused by the contact of the metal wire, and improving the safety performance of the end cover assembly.

Based on the above considerations, in order to solve the problem of short circuit between the electrode terminal and the end cover, the inventors have designed a new end cover assembly after in-depth research. The end cover assembly includes: an end cover with a through hole; an electrode terminal, at least part of which is located in the through hole; a terminal board insulated from the end cover, arranged on one side of the end cover in an axial direction of the through hole, and the terminal plate being connected to the electrode terminal; a first insulating member arranged around the electrode terminal along a peripheral direction of the through hole, and at least part of the first insulating member being clamped between the electrode terminal and the terminal board in the axial direction. In a radial direction of the through hole, at least part of the first insulating member is located between the electrode terminal and the end cover and abuts against at least one of the electrode terminal and the end cover.

In such an end cover assembly, the first insulating member is provided surrounding the electrode terminal and at least part of the first insulating member is clamped between the electrode terminal and the terminal board in the axial direction of the through hole, at least part of the first insulating member is located between the electrode terminal and the end cover in the radial direction and abuts against at least one of the electrode terminal and the end cover, thus when a metal wire is generated between the terminal board and the electrode terminal, the transmission path from the metal wire to the end cover can be blocked with the part of the first insulating member clamped between the electrode terminal and the terminal board in the axial direction and the part thereof located between the electrode terminal and the end cover in the radial direction, thereby preventing the metal wire from contacting the electrode terminal and the end cover to reduce the risk of short circuit.

Technical solutions described in embodiments of the present disclosure are applicable to a battery and an electrical apparatus with the battery.

The electrical apparatus can be vehicles, mobile phones, portable devices, laptops, ships, spacecraft, electric toys, electric tools and the like. The vehicles can be fuel vehicles, gas vehicles or new energy vehicles. The new energy vehicles can be pure electric vehicles, hybrid vehicles, extended-range vehicles and the like. The spacecraft include planes, rockets, space shuttles, spaceships, and the like. The electric toys include stationary or mobile electric toys, such as game consoles, electric car toys, electric ship toys and electric aircraft toys. The electric tools include metal cutting electric tools, grinding electric tools, assembly electric tools and railway electric tools, such as electric drills, electric grinders, electric wrenches, electric screwdrivers, electric hammers, impact drills, concrete vibrators and planers. There are no special restrictions on the above-mentioned electrical apparatus in the embodiments of the present disclosure.

It should be understood that the technical solutions described in the embodiments of the present disclosure are not limited to the battery cell, the battery and the electrical apparatus described above, but can also be applied to all battery cells, batteries with the end cover assembly and the electrical apparatus with the battery. However, for the sake of simplicity, the following embodiments are all explained by taking an electric vehicle as an example.

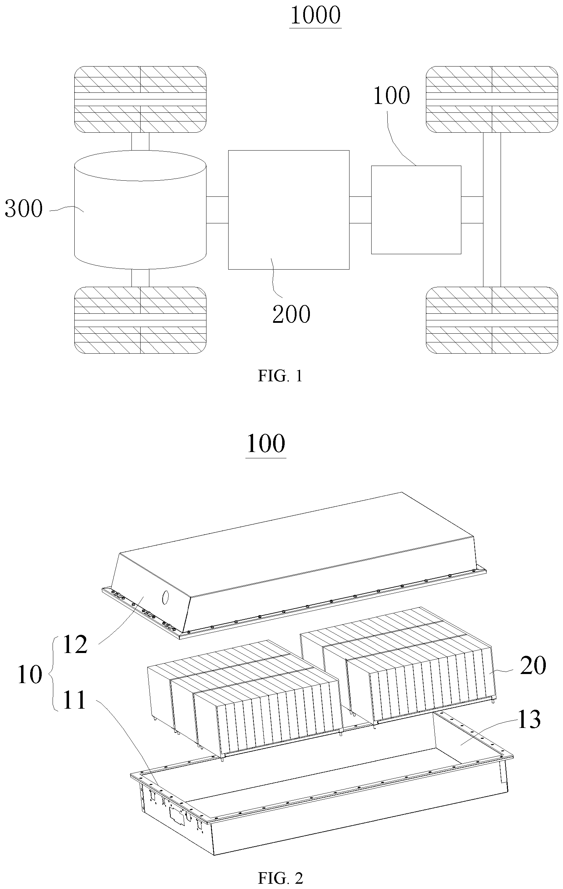

Referring to FIG. 1, which is a structural diagram of a vehicle 1000 provided in some embodiments of the present disclosure. The vehicle 1000 can be a fuel vehicle, a gas vehicle or a new energy vehicle. The new energy vehicle can be a pure electric vehicle, a hybrid vehicle, an extended-range vehicle and the like. A battery 100 is provided in the interior of a vehicle 1000, and can be arranged in the bottom or in the head or back of the vehicle 1000. The battery 100 can be used to provide electricity to the vehicle 1000, for example, the battery 100 can be used as an operating power source for the vehicle 1000. The vehicle 1000 may also include a controller 200 and a motor 300. The controller 200 is configured to control the battery 100 to provide electricity to the motor 300, for example, for electricity requirements for the starting, navigation and driving of the vehicle 1000.

In some embodiments of the present disclosure, the battery 100 may be used not only as an operating power source for the vehicle 1000, but also as a driving power source for the vehicle 1000, providing driving power to the vehicle 1000 in place or in part in place of fuel or natural gas.

Please refer to FIG.2 which is an exploded diagram of the battery 100 provided in some embodiments of the present disclosure. The battery 100 includes a box 10 and battery cells 20 accommodated in the box 10. The box 10 is configured to provide an accommodating space for the battery cells 20 and can be of a variety of structures. In some embodiments, the box 10 may include a first part 11 and a second part 12 that are mutually covered. The first part 11 and the second part 12 jointly define an accommodating space 13 for accommodating the battery cells 20. The second part 12 can have a hollow structure with an opening at one end, the first part 11 can have a plate structure, and the first part 11 closes an opening side of the second part 12 to form the accommodating space 13 by the first part 11 and the second part 12. Both the first part 11 and the second part 12 may have a hollow structure with an opening at one side. An opening side of the first part 11 covers an opening side of the second part 12. Of course, the box 10 formed by the first part 11 and the second part 12 can be in a variety of shapes, such as cylinders, cuboids, etc.

In the battery 100, a plurality of battery cells can be provided. The plurality of battery cells can be in a series connection, a parallel connection, or a mixed connection. The mixed connection refers to a mixture of the series mixed connection and the parallel mixed connection. The plurality of battery cells can be directly in a series connection, a parallel connection, or a mixed connection, and then the entirety formed by the plurality of battery cells is accommodated in the box 10. Of course, the battery 100 can be in the form of a battery module formed by the plurality of battery cells in a series connection, a parallel connection, or a mixed connection, and then a plurality of battery modules can be in a series connection, a parallel connection, or a mixed connection to form the entirety and accommodated in the box 10. The battery 100 can include other structures, for example, the battery 100 can further include a bus component to electrically connect the plurality of battery cells.

Each battery cell 20 can be a secondary battery cell or a primary battery, and can be a lithium sulfur battery, a sodium ion battery, or a magnesium ion battery, which is not limited thereto. The battery cell 20 may be cylindrical, flat, rectangular parallelepiped or other shapes.

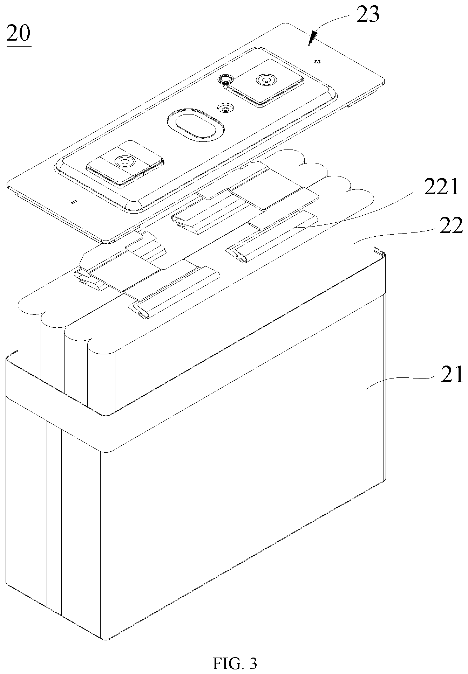

Please refer to FIG. 3 which is an exploded schematic structural diagram of the battery cell 20 provided in some embodiments of the present disclosure. The battery cell 20 refers to the smallest unit that constitutes the battery. The battery cell 20 includes a housing 21, an electrode assembly 22 and an end cover assembly 23.

The housing 21 is a component configured to cooperate with the end cover assembly 23 to form an internal environment of the battery cell 20. The internal environment formed can be configured to accommodate the electrode assembly 22, electrolyte and other components. The housing 21 and the end cover assembly 23 may be independent components, an opening may be provided on the housing 21, and the end cover assembly 23 covers the opening at the opening to form the internal environment of the battery cell 20. Without limitation, the end cover assembly 23 and the housing 21 can also be integrated. Specifically, a common connection surface can be formed between the end cover assembly 23 and the housing 21 before other components are put into the housing. When the housing 21 needs to be packaged inside, the end cover assembly 23 covers the housing 21. The housing 21 can be of various shapes and sizes, such as rectangular parallelepiped, cylinder, hexagonal prism, etc. Specifically, the shape of the housing 21 can be determined according to the specific shape and size of the electrode assembly 22. The housing 21 may be made of a variety of materials, such as copper, iron, aluminum, stainless steel, aluminum alloy, plastic, etc., which are not particularly limited in the embodiments of the present disclosure.

The electrode assembly 22 is a component in the battery cell 20 where electrochemical reactions occur. One or more electrode assemblies 22 may be contained within the housing 21. The electrode assembly 22 is mainly formed by a positive electrode sheet and a negative electrode sheet that are wound or stacked, and a separator is usually provided between the positive electrode sheet and the negative electrode sheet. Portions of the positive electrode sheet and the negative electrode sheet that contain active material constitute the main body of the electrode assembly 22, and portions of the positive electrode sheet and the negative electrode sheet that do not contain active material constitute tabs 221. The positive pole tab and the negative pole tab can be located together at one end of the main body or located at two ends of the main body, respectively. During the charging and discharging process of the battery, the positive active material and negative active material react with the electrolyte, and the pole tabs 221 are connected to the electrode terminal to form a current loop.

The end cover assembly 23 refers to a component that covers the opening of the housing 21 and forms an accommodating cavity with the housing 21 for accommodating the electrode assembly 22. The end cover assembly 23 isolates the internal environment of the battery cell 20 from the external environment. Without limitation, the shape of the end cover assembly 23 may be adapted to the shape of the housing 21 to fit the housing 21. Optionally, the end cover assembly 23 can be made of a material with a certain hardness and strength (such as aluminum alloy). In this way, the end cover assembly 23 is less likely to be deformed when subjected to extrusion and collision, allowing the battery cell 20 to have high structural strength, and improved safety performance.

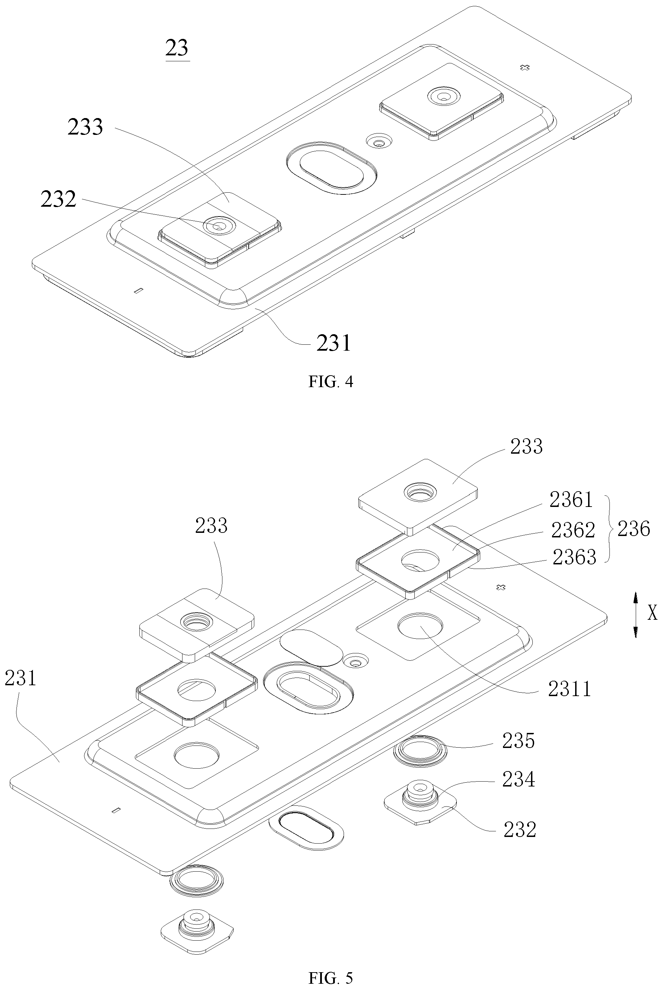

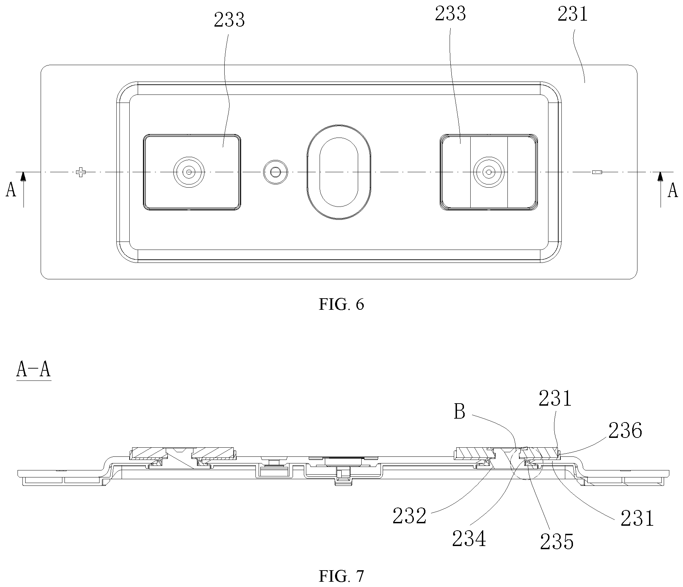

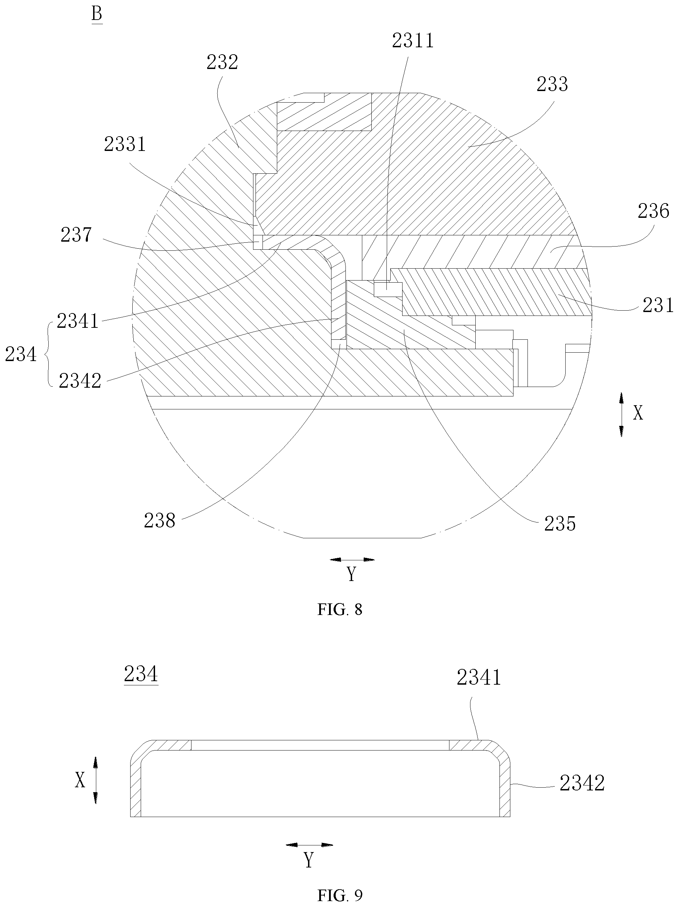

Please refer to FIG. 4 to FIG. 8. FIG. 4 is an isometric view of an end cover assembly provided in some embodiments of the present disclosure. FIG. 5 is an exploded view of an end cover assembly provided in some embodiments of the present disclosure. FIG. 6 is a top view of an end cover assembly provided in some embodiments of the present disclosure. FIG. 7 is a cross-sectional view taken along line A-A in FIG. 6. FIG. 8 is a partial enlarged view of part B in FIG. 7.

The end cover assembly 23 provided in embodiments of the present disclosure includes an end cover 231, an electrode terminal 232, a terminal board 233 and a first insulating member 234. The end cover 231 is provided with a through hole 2311. At least part of the electrode terminal 232 is located in the through hole 2311. The terminal board 233 is insulated from the end cover, provided on a side of the end cover 231 in an axial direction X of the through hole 2311, and connected to the electrode terminal 232. The first insulating member 234 is arranged around the electrode terminal 232 along a peripheral direction of the through hole 2311, at least part of the first insulating member is clamped between the electrode terminal 232 and the terminal board 233 in the axial direction X, and at least partially located between the electrode terminal 232 and the end cover 231 in the radial direction Y of the through hole 2311and abutting against at least one of the electrode terminal 232 and the end cover 231.

Optionally, the end cover 231 is a component that covers the opening of the housing 21 to isolate the internal environment of the battery cell 20 from the external environment. The end cover 231 and the housing 21 jointly define a sealed space for accommodating the electrode assembly 22, electrolyte and other components.

Optionally, the shape of the end cover 231 can be adapted to the shape of the housing 21. For example, the housing 21 has a rectangular parallelepiped structure, and the end cover 231 has a rectangular plate structure adapted to the housing 21. For example, the housing 21 has a cylindrical structure, and the end cover 231 has a circular plate structure adapted to the housing 21. The end cover 231 can also be made of a variety of materials, such as copper, iron, aluminum, steel, aluminum alloy, etc. The material of the end cover 231 and the housing can be the same or different.

Optionally, the electrode terminal 232 is configured to be electrically connected with the electrode assembly 22 to output the electrical energy of the battery cell 20. Electrode terminals 232 may include a positive electrode terminal for electrical connection with the positive electrode tab and a negative electrode terminal for electrical connection with the negative electrode tab. The positive electrode terminal and the positive electrode tab can be connected directly or indirectly, and the negative electrode terminal and the negative electrode tab can be connected directly or indirectly.

Optionally, an insulating structure may be provided between the terminal board 233 and the end cover 231 to insulate the terminal board 233 and the end cover 231.

Optionally, the terminal board 233 is connected to each electrode terminal 232.

Optionally, a mounting hole can be provided on the terminal board 233, and the terminal board 233 can be sleeved on the electrode terminal 232 and connected to the electrode terminal 232 through the mounting hole.

Optionally, the first insulating member 234 may be provided corresponding to each electrode terminal 232. The first insulating member 234 is provided around the corresponding electrode terminal 232 in the peripheral direction of the through hole 2311.

Optionally, the terminal board 233 and the electrode terminal 232 are at least partially spaced apart in the axial direction X and forms a first clamping space. At least part of the first insulating member 234 is located in the clamping space and clamped between the terminal board 233 and the electrode terminal 232. The electrode terminal 232 and the end cover 231 are at least partially spaced in the radial direction Y of the through hole 2311 and form a second clamping space, and at least part of the first insulating member 234 is located in the second clamping space.

Optionally, the portion of the first insulating member 234 located between the electrode terminal 232 and the end cover 231 in the radial direction Y can abut against either the electrode terminal 232 or the end cover 231, or of course, can abut against both the electrode terminal 232 and the end cover 231 at the same time.

Optionally, the portion of the first insulating member 234 clamped between the electrode terminal 232 and the terminal board 233 and the portion of the first insulating member 234 located between the electrode terminal 232 and the end cover 231 may be connected to each other, or of course may be separated provided.

In the end cover assembly 23 provided in the embodiments of the present disclosure, the first insulating member 234 is disposed around the electrode terminal 232, at least part of the first insulating member 234 is clamped between the electrode terminal 232 and the terminal board 233 in the axial direction X of the through hole 2311, and at least part of the first insulating member 234 is clamped between the electrode terminal 232 and the end cover 231 in the radial direction Y of the through hole 2311 and abuts against at least one of the electrode terminal 232 and the end cover 231, thus when a metal wire is generated between the terminal board 233 and the electrode terminal 232, a transmission path from the metal wire to the end cover 231 can be prevented in multiple directions by means the part of the first insulating member 234 clamped between the electrode terminal 232 and the terminal board 233 in the axial direction X and the part of the first insulating member between the electrode terminal 232 and the end cover 231 in the radial direction Y, thereby preventing the metal wire from contacting the electrode terminal 232 and the end cover 231 and reducing the risk of short circuit.

Please refer to FIGS. 8 and 9. FIG. 9 is a schematic structural diagram of the first insulating member 234 provided in some embodiments of the present disclosure.

As some optional implementations, in the end cover assembly 23 provided in the embodiments of the present disclosure, the first insulating member 234 includes a first insulating part 2341 and a second insulating part 2342. An end of the first insulating part 2341 away from the electrode terminal 232 in the radial direction Y is connected to an end of the second insulating part 2342 facing the terminal board 233 in the axial direction X. At least part of the first insulating part 2341 is clamped between the electrode terminal 232 and the terminal board 233. At least part of the second insulating part 2342 is located between the electrode terminal 232 and the end cover 231 and abuts against at least one of the electrode terminal 232 and the end cover 231.

Optionally, both the first insulating part 2341 and the second insulating part 2342 may be annular and are arranged around the electrode terminal 232.

Optionally, the first insulating part 2341 and the second insulating part 2342 may be distributed along the axial direction X of the through hole 2311.

Optionally, the first insulating part 2341 and the second insulating part 2342 may be of an integrated structure, or of course may be formed separately and then connected as a single body through bonding or other methods.

In the end cover assembly 23 provided in embodiments of the present disclosure, the first insulating member 234 includes the first insulating part 2341 and the second insulating part 2342, and at least part of the first insulating part 2341 is clamped between the electrode terminal 232 and the terminal board 233, thus the first insulating part 2341 can prevent the metal wire from extending toward the end cover 231 in the radial direction Y; at least part of the second insulating part 2342 is located between the electrode terminal 232 and the end cover 231 and abuts against at least one of the electrode terminal 232 and the end cover 231, the metal wire on the electrode terminal 232 and the metal wires on the end cover 231 can be prevented from extend toward each other and coming into contact, effectively reducing the risk of short circuit between the electrode terminal 232 and the end cover 231 caused by the metal wires coming into contact. Moreover, the end of the first insulating part 2341 away from the electrode terminal in the radial direction Y is connected to the end of the second insulating part 2342 facing the terminal board 233 in the axial direction X, thereby facilitating a forming of the first insulating part 234 and the installation and positioning of the first insulating part 2341 and the second insulating part 2342.

As some optional implementations, the first insulating part 2341 and the second insulating part 2342 are in a structure of an integrated film layer.

Optionally, the first insulating part 2341 and the second insulating part 2342 may be made of the same material, which facilitates integrated molding.

Optionally, the first insulating part 2341 and the second insulating part 2342 may be made of polypropylene or a material containing polypropylene.

Optionally, a film thicknesses of the first insulating part 2341 and that of the second insulating part 2342 may be the same to facilitate molding, or of course may be different.

Optionally, the first insulating part 2341 and the second insulating part 2342 may be integrally formed by injection molding or other methods.

In the end cover assembly 23 provided in embodiments of the present disclosure, the first insulating part 2341 and the second insulating part 2342 are formed as an integral film layer, thereby guaranteeing a protective effect of the first insulating member 234 and avoiding the risk of short circuit between the electrode terminal 232 and the end cover 231 caused by the metal wires coming into contact, at the same time facilitating the forming of the film layer structure, reducing the difficulty of forming, and guaranteeing the connection strength between the first insulating part 2341 and the second insulating part 2342. Moreover, the form of a film layer takes up a little space and is malleable to have a certain amount of deformation, which is convenient for assembly.

As some optional implementations, in the radial direction Y, a first gap 237 is formed between an end of the first insulating part 2341 close to the electrode terminal 232 and the electrode terminal 232 .

Optionally, in the radial direction Y of the through hole 2311, an end of the first insulating part 2341 facing the electrode terminal 232 is spaced apart from the electrode terminal 232 to form the first gap 237. The formed first gap 237 may be an annular gap.

In the end cover assembly 23 provided in embodiments of the present disclosure, the first gap 237 is formed between an end of the first insulating part 2341 close to the electrode terminal 232 and the electrode terminal 232 in the radial direction Y, thereby facilitating the assembly of the first insulating part 2341 on the electrode terminal 232; the first gap 237 can be configured to accommodate the metal wire generated during the assembly of the terminal board 233 and the electrode terminal 232, thereby preventing the metal wire from piercing the first insulating part 2341, and preventing the metal wire extending and migrating to the side where the end cover 231 is located caused by deformation under an external force such as creeping of the first insulating member 234 when the end cover assembly 23 is in operation.

In some optional embodiments, in the end cover assembly 23 provided in the embodiments of the present disclosure, a cutout 2331 is provided on an end of the terminal board 233 toward the first insulating member 234 in the axial direction X and is communicated to the first gap 237.

Optionally, the cutout 2331 may extend from the surface of the terminal board 233 mating with the electrode terminal 232 in the radial direction Y to the side where the first insulating member 234 is located.

Optionally, the cutout 2331 may extend from the wall surrounding the mounting hole on the terminal board 233 to the side where the first insulating member 234 is located.

Optionally, the cutout 2331 may be annular and disposed around the electrode terminal 232.

In the end cover assembly 23 provided in embodiments of the present disclosure, the cutout 2331 communicating with the first gap 237 is provided on an end of the terminal board 233 facing the first insulating member 234 in the axial direction X, thereby facilitating the assembly between the terminal board 233 and the electrode terminal 232 in the axial direction X; at the same time, the cutout 2331 can reduce a frictional contact toward one end of the first insulating member 234 when the terminal board 233 and the electrode terminal 232 are assembled, thereby reducing the probability of metal wires being generated when the terminal board and the electrode terminal are assembled.

In some optional embodiments, an orthographic projection of the cutout 2331 is located within the first gap 237 in the axial direction X.

Optionally, the orthographic projection of the cutout 2331 can be understood as the orthographic projection in the axial direction X of the wall surrounding the cutout 2331.

Optionally, a radial dimension of an end of the cutout 2331 away from the electrode terminal 232 in the radial direction Y is smaller than a radial dimension of the end of the first insulating part 2341 facing the electrode terminal 232.

In the end cover assembly 23 provided in embodiments of the present disclosure, the orthographic projection of the cutout 2331 is located within the first gap 237 in the axial direction X of the through hole 2311, thus the metal wires generated during assembly of the terminal board 233 and the electrode terminal 232 can all fall into the first gap 237, the first insulating part 2341 can restrict the extension of the metal wire to the side where the end cover 231 is located in the radial direction, thereby reducing the probability of short circuit.

In some optional embodiments, the cutout 2331 may be a tapered hole, and in the axial direction X of the through hole 2311, the opening of the cutout 2331 towards one end of the first insulating part 2341 is greater than the opening of one end away from the first insulating part 2341.

Optionally, the cutout 2331 can be a tapered hole provided around the electrode terminal 232.

Optionally, the cutout 2331 can be coaxial with the first through hole 2311.

Optionally, the cutout 2331 has a large opening end and a small opening end in the axial direction X, and the small opening end is away from the first insulating part 2341 in the axial direction X and in in an clearance fit with the electrode terminal 232 in the radial direction Y of the through hole 2311. The large opening end is oriented towards the first insulating part 2341 in the axial direction X, to form a gap in the radial direction Y of the through hole 2311 together with the electrode terminal 232. The distance between the large opening end and the electrode terminal 231 is smaller than the distance between one end of the first insulating part 2341 facing the electrode terminal 232 and the electrode terminal 232.

In the end cover assembly 23 provided in embodiments of the present disclosure, the cutout 2331 is configured as a tapered hole, and an opening of an end of the cutout 2331 facing the first insulating part 2341 is larger than an opening of an end of the cutout away from the first insulating part 2341 in the axial direction X, thereby facilitating the assembly between the terminal board 233 and the electrode terminal 232, and reducing the metal wires caused by friction.

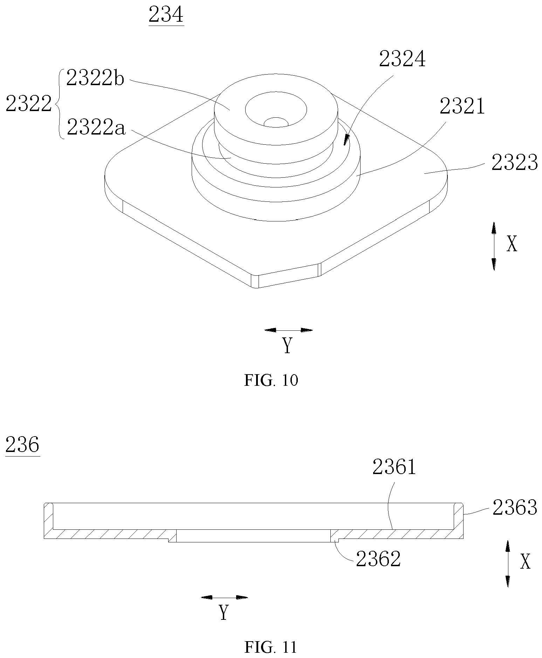

Please refer to FIGS. 8 to 10. FIG. 10 an isometric view of the electrode terminal 232 provided in some embodiments of the present disclosure.

As some optional embodiments, in the end cover assembly 23 provided in the embodiments of the present disclosure, the electrode terminal 232 includes a main body 2321 and a protruding part 2322 at least partially protruding from the main body 2321 in the axial direction X. The terminal board 233 is sleeved on the protruding part 2322, and in the radial direction Y, the radial dimension of the main body 2321 is greater than that of the protruding part 2322. A step surface 2324 is connected between the main body 2321 and the protruding part 2322. The first insulating part 2341 is arranged around the protruding part 2322 and stacked on the step surface 2324, and the second insulating part 2342 is arranged around the outer surface of the main body 2321 and abuts against the outer peripheral surface.

Optionally, the main body 2321 and the protruding part 2322 can both have a cylindrical structure, is either prismatic or cylindrical, and can be cylindrical.

Optionally, along the axial direction X, the main body 2321 can have an equal cross-section structure, and the protruding part 2322 can have a variable cross-section structure. Optionally, the cross-sectional dimension of the protruding part 2322 along the axial direction X can vary segment by segment.

Optionally, the protruding part 2322 may include a first shaft section 2322a and a second shaft section 2322b. The first shaft section 2322a is connected between the main body 2321 and the second shaft section 2322b. The radial dimension of the first shaft section 2322a is smaller than that of the second shaft section 2322b, and the radial dimension of the second shaft section 2322b is smaller than that of the main body 2321. The step surface 2324 is connected between the first shaft section 2322a and the main body 2321.

Optionally, both the main body 2321 and the protruding part 2322 may be at least partially located within the through hole 2311.

Optionally, the terminal board 233 is sleeved on the protruding part 2322 through the mounting hole and is clearance fit with the protruding part 2322.

In the end cover assembly 23 provided in embodiments of the present disclosure, the electrode terminal 232 is configured in the form of the above structural, allowing the first insulating part 2341 to be clamped between the main body 2321 and the terminal board 233, and the second insulating part 2342 to surround and fit on the outer peripheral surface of the main body 2321, and effectively preventing the metal wire from extending and contacting between the electrode terminal 232 and the end cover 231.

As some optional embodiments, in the end cover assembly 23 provided in the embodiments of the present disclosure, the electrode terminal 232 further includes a limiting part 2323 which is arranged around the main body 2321 and located on the side of the main body 2321 away from the protruding part 2322 in the axial direction X. In the axial direction X, a second gap 238 is formed between the second insulating part 2342 and the surface of the limiting part 2323 facing the protruding part 2322.

Optionally, the limiting part 2323 can be set around an outer periphery of the main body 2321, and the radial dimension of the limiting part 2323 is greater than that of the main body 2321.

Optionally, a specific value of the second gap 238 between the second insulating part 2342 and the surface of the limiting part 2323 facing the protruding part 2322 can be set according to insulation requirements. In an optional example, the projection of the through hole 2311 in the radial direction Y can cover the side wall of the through hole 2311 formed by the end cover 231.

In the end cover assembly 23 provided in embodiments of the present disclosure, the limiting part 2323 of the electrode terminal 232 can facilitate connection with components such as the end cover 231. By the second gap 238 formed between the second insulating part 2342 and the surface of the limiting part 2323 facing the protruding part 2322, a margin for machining accuracy is left, and the second insulating part 2342 is prevented from being too long, which will cause an interference when the entire first insulating member 234 to be in the state of being mounted to the electrode terminal 232 or unevenness of the first insulating part 2341 after assembly and thereby adversely affecting barrier requirements of the metal wire.

As an optional embodiment, the end cover assembly 23 provided in the embodiments of the present disclosure further includes a sealing member 235 which is arranged around the first insulating member 234 and extends into the through hole 2311. In the radial direction Y, at least part of the sealing member 235 is clamped between the first insulating member 234 and the end cover 231.

Optionally, the sealing member 235 can be provided between each electrode terminal 232 and the end cover 231.

Optionally, part of the sealing member 235 can be inserted into the through hole 2311, or fully inserted into the through hole 2311.

In the end cover assembly 23 provided in embodiments of the present disclosure, the sealing member 235 is arranged around the first insulating member 234 and extends into the through hole 2311, thereby sealing an edge of the through hole 2311 and improving the safety performance of the end cover assembly 23; at the same time, at least part of the sealing member 235 is clamped between the first insulating member 234 and the end cover 231 in the radial direction Y, thereby improving the sealing performance of the end cover assembly 23, and the sealing member cooperates with the first insulating member 234 to block the metal wire, thereby reducing the probability of a short circuit between the electrode terminal 232 and the end cover 231 caused by the metal wires coming into contact.

As an optional embodiment, in the end cover assembly 23 provided in the embodiments of the present disclosure, at least part of the sealing member 235 is clamped between the electrode terminal 232 and the end cover 231 in the axial direction X.

Optionally, when the electrode terminal 232 includes the limiting part 2323, the sealing member 235 can abut against the limiting part 2323 in the axial direction X and at least part of the sealing member is clamped between the limiting part 2323 and the end cover 231.

In the end cover assembly 23 provided in embodiments of the present disclosure, at least part of the sealing member 235 is clamped between the electrode terminal 232 and the end cover 231 in the axial direction X, thereby guaranteeing the sealing performance between the end cover 231 and the electrode terminal 232, avoiding electrolyte leakage, and at the same time preventing external pollutants from entering the battery.

Please refer to FIGS. 8 to 11. FIG. 11 is a schematic structural diagram of the second insulating member 236 provided in some embodiments of the present disclosure.

As an optional embodiment, the end cover assembly 23 provided in the embodiments of the present disclosure further includes a second insulating member 236 which is arranged around the electrode terminal 232. In the axial direction X, at least part of the second insulating member 236 is clamped between the end cover 231 and the terminal board 233 to insulate the terminal board 233 from the end cover 231.

Optionally, in the axial direction X, the second insulating member 236, the terminal board 233 and the end cover 231 can be stacked.

Optionally, an avoidance hole can be provided on the second insulating member 236, and the electrode terminal 232 can pass through the avoidance hole, so that the second insulating member 236 is arranged around the electrode terminal 232.

Optionally, a surface of the end cover 231 facing the terminal board 233 in the axial direction X can be provided with a recess, and the second insulating member 236 and terminal board 233 can be at least partially sunk into the recess to reduce the height of the end cover assembly 23 in the axial direction X.

In the end cover assembly 23 provided in the embodiments of the present disclosure, the second insulating member 236 is provided to facilitate the insulation setting between the terminal board 233 and the end cover 231, thereby improving the safety performance of the end cover assembly 23.

As an optional embodiment, in the end cover assembly 23 provided in the embodiments of the present disclosure, the second insulating member 236 includes a main separator 2361 and a first protrusion 2362, the main separator 2361 is clamped between the end cover 231 and the terminal board 233 in the axial direction X, the first protrusion 2362 is set at one end of the main separator 2361 near the electrode terminal 232 in the radial direction Y, and the first protrusion 2362 extends into the through hole 2311 and abuts against the sealing member 235.

Optionally, the first protrusion 2362 can have a ring-shaped structure, and the first protrusion 2362 can be spaced apart from the first insulating member 234 in the radial direction Y, or can be in contact with the first insulating member 234.

Optionally, the first protrusion 2362 can be coaxially arranged with the sealing member 235.

In the end cover assembly 23 provided in embodiments of the present disclosure, the second insulating member 236 with the main separator 2361 and the first protrusion 2362 can insulate the terminal board 233 from the end cover 231. At the same time, the first protrusion 2362 abutted against the sealing member 235 that co-covers the end cover 231 with the sealing member 235 to form the wall of the through hole 2311, can play a joint protective role with the first insulating member 234, thereby providing double barriers on the migration path of the metal wire, and avoiding the short circuit caused by the electrode terminal 232 contacting the end cover 231.

As an optional embodiment, in the end cover assembly 23 provided in the embodiments of the present disclosure, the second insulating member 236 further includes a second protrusion 2363 which is set at one end of the main separator 2361 away from the electrode terminal 232 in the radial direction Y and extends towards a side away from the end cover 231 along the axial direction X. The second protrusion 2363 is arranged around the terminal board 233 in the peripheral direction and abuts with the terminal board 233.

Optionally, the second protrusion 2363 may have a ring-shaped structure.

Optionally, the extension direction of the second protrusion 2363 is opposite to that of the first protrusion 2362.

Optionally, the second protrusion 2363 and the first protrusion 2362 can be set coaxially.

In the end cover assembly 23 provided in embodiments of the present disclosure, the second insulating member 236 further includes the second protrusion 2363, the second protrusion that surrounds the terminal board 233 in the peripheral direction and abuts against the terminal board 233 can limit the terminal board 233 in the radial direction Y, and the outer peripheral surface of the terminal board 233 can be protected through the second protrusion 2363 to avoid short circuit with the end cover 231, thereby insulating the terminal board 233 from the end cover 231, and improving the safety performance of the end cover assembly 23.

In order to better understand the terminal assembly 23 provided in the embodiments of the present disclosure, a specific example will be used to illustrate the end cover assembly 23 provided in the embodiments of the present disclosure. For example, the end cover assembly 23 may include the end cover 231, the electrode terminal 232, the terminal board 233, and the first insulating member 234. The end cover 231 has the through hole 2311. At least part of the electrode terminal 232 is located in the through hole 2311. The terminal board 233 is insulated from the end cover, arranged on one side of the end cover 231 in the axial direction X of the through hole 2311, and the terminal board 233 is connected to the electrode terminal 232. The first insulating member 234 is arranged around the electrode terminal 232 along the peripheral direction of the through hole 2311. The first insulating member 234 includes the first insulating part 2341 and the second insulating part 2342 which are in a structure of an integrated film layer. At least part of the first insulating part 2341 is clamped between the electrode terminal 232 and the terminal board 233. In the radial direction Y, the first gap 237 is formed between one end of the first insulating part 2341 near the electrode terminal 232 and the electrode terminal 232. In the axial direction X, the cutout 2331 is provided on an end of the terminal board 233 towards the first insulating part 234 and communicated to the first gap 237, and the orthographic projection of the cutout 2331 is located within the first gap 237. The electrode terminal 232 includes the main body 2321 and the protruding part 2322 at least partially protruding from the main body 2321 in the axial direction X. The terminal board 233 is sleeved on the protruding part 2322, and in the radial direction Y, the radial dimension of the main body 2321 is greater than that of the protruding part 2322. The step surface is connected between the main body 2321 and the protruding part 2322, and the first insulating part 2341 is arranged around the protruding part 2322 and stacked on the step surface. The second insulating part 2342 is arranged around the outer peripheral surface of the main body 2321 and abuts against the outer peripheral surface.

According to some embodiments of the present disclosure, the present disclosure also provides a battery cell including the end cover assembly 23 as described in any of the above schemes.

According to some embodiments of the present disclosure, the present disclosure also provides a battery including the battery monomer as described in any of the above schemes.

According to some embodiments of the present disclosure, the present disclosure also provides an electrical apparatus including the battery as described in any of the above schemes configured to provide electrical energy to the electrical apparatus.

The electrical apparatus can be any of the aforementioned apparatus or systems that use the battery.

Finally, it should be noted that: the above embodiments are only used to illustrate, not to limit, the technical solution of the present disclosure. Although the present disclosure is described in detail with reference to the foregoing embodiments, those skilled in the art should understand that they may still modify the technical solutions described in the foregoing embodiments, or replace some or all of the technical features with equivalents, but these modifications or replacements do not depart the essence of the corresponding technical solutions from the gist and scope of the technical solutions of each embodiment of the present disclosure, and should all fall within the scope of the claims and description of the present disclosure. Especially, as long as there is no structural conflict, the various technical features mentioned in each embodiment can be combined in any way. The present disclosure is not limited to specific embodiments disclosed herein, but includes all technical solutions falling within the scope of the claims.

## Claims

1. An end cover assembly, comprising:
an end cover provided with a through hole;
an electrode terminal, at least part of which is located in the through hole;
a terminal board, insulated from the end cover, provided on a side of the end cover in an axial direction of the through hole, and connected to the electrode terminal; and
a first insulating member which is arranged around the electrode terminal along a peripheral direction of the through hole, wherein at least part of the first insulating member is clamped between the electrode terminal and the terminal board in the axial direction, and at least part of the first insulating member is located between the electrode terminal and the end cover in a radial direction of the through hole and abuts against at least one of the electrode terminal and the end cover.

2. The end cover assembly according to claim 1, wherein the first insulating member comprises a first insulating part and a second insulating part, an end of the first insulating part away from the electrode terminal in the radial direction is connected to an end of the second insulating part facing the terminal board in the axial direction, at least part of the first insulating part is clamped between the electrode terminal and the terminal board, and at least part of the second insulating part is located between the electrode terminal and the end cover and abuts against at least one of the electrode terminal and the end cover.

3. The end cover assembly according to claim 2, wherein the first insulating part and the second insulating part are formed as an integral film layer.

4. The end cover assembly according to claim 2 or 3, wherein a first gap is formed between an end of the first insulating part close to the electrode terminal and the electrode terminal in the radial direction.

5. The end cover assembly according to claim 4, wherein a cutout communicating with the first gap is provided on an end of the terminal board facing the first insulating member in the axial direction.

6. The end cover assembly according to claim 5, wherein an orthographic projection of the cutout in the axial direction is located within the first gap.

7. The end cover assembly according to claim 5 or 6, wherein the cutout is configured as a tapered hole, and an opening of an end of the cutout facing the first insulating part is larger than an opening of an end of the cutout away from the first insulating part in the axial direction.

8. The end cover assembly according to any one of claims 2 to 7, wherein the electrode terminal comprises a main body and a protruding part protruding from the main body in the axial direction, the terminal board is sleeved on the protruding part, a radial dimension of the main body is greater than a radial dimension of the protruding part in the radial direction, a step surface is connected between the main body and the protruding part, the first insulating part is arranged around the protruding part and is stacked on the step surface, and the second insulating part is arranged around an outer peripheral surface of the main body and abuts against the outer peripheral surface.

9. The end cover assembly according to claim 8, wherein the electrode terminal further comprises a limiting part that is provided around the main body and is located on a side of the main body away from the protruding part in the axial direction, and a second gap is formed between the second insulating part and a surface of the limiting part facing the protruding part in the axial direction.

10. The end cover assembly according to any one of claims 1 to 9, wherein the end cover assembly further comprises a sealing member that is arranged around the first insulating member and extends into the through hole, and at least part of the sealing member is clamped between the first insulating member and the end cover in the radial direction.

11. The end cover assembly according to claim 10, wherein at least part of the sealing member is clamped between the electrode terminal and the end cover in the axial direction.

12. The end cover assembly according to claim 10 or 11, wherein the end cover assembly further comprises a second insulating member that is arranged around the electrode terminal, and at least part of the second insulating member is clamped between the end cover and the terminal board in the axial direction, thereby insulating the terminal board from the end cover.

13. The end cover assembly according to claim 12, wherein the second insulating member comprises a main separator that is clamped between the end cover and the terminal board in the axial direction and a first protrusion that is provided at an end of the main separator close to the electrode terminal in the radial direction, and the first protrusion extends into the through hole and abuts against the sealing member.

14. The end cover assembly according to claim 13, wherein the second insulating member further comprises a second protrusion that is disposed on an end of the main separator away from the electrode terminal in the radial direction and extends away from the end cover along the axial direction, and the second protrusion is arranged around the terminal board along the peripheral direction and abuts against the terminal board.

15. A battery cell, comprising:
a housing provided with an opening;
the end cover assembly according to any one of claims 1 to 14 configured to close the opening and form an accommodating cavity with the housing; and
an electrode assembly provided in the accommodating cavity and electrically connected to the electrode terminal of the end cover assembly.

16. A battery comprising the battery cell according to claim 15.

17. An electrical apparatus comprising the battery according to claim 16 that is configured to provide electrical energy.
